# FASCICULE DE BREVET EUROPEEN

(11) **EP 2 203 610 B1**
(45) Date de publication et mention de la délivrance du brevet: **08.11.2017**
(21) Numéro de dépôt: 08845333.7
(22) Date de dépôt: 24.10.2008
(51) Int. Cl.: E04B 1/76

(54) **MATERIAU THERMOISOLANT A BASE DE FIBRES ORGANIQUES ET D'UNE POUDRE RUPTEUR DE RAYONNEMENT INFRAROUGE, ET SON UTILISATION EN ISOLATION THERMIQUE**
WÄRMEISOLIERENDES MATERIAL AUF GRUNDLAGE ORGANISCHER FASERN UND EINES PULVERS ZUR BRECHUNG VON INFRAROTSTRAHLUNG SOWIE SEINE VERWENDUNG BEI DER WÄRMEISOLIERUNG
A THERMALLY INSULATING MATERIAL BASED ON ORGANIC FIBRES AND ON A POWDER THAT BREAKS DOWN INFRARED RADIATION, AND USE THEREOF IN THERMAL INSULATION

(30) Priorité: 26.10.2007 FR 0707553
(43) Date de publication de la demande: 07.07.2010
(73) Titulaire: Electricité de France, 75008 Paris (FR)
(72) Inventeur: YRIEIX, Bernard, F-77250 Moret Sur Loing (FR); MILLEVILLE, Pierre-Henri, F-77670 Vernou (FR)
(74) Mandataire: Cabinet Plasseraud
(86) Numéro de dépôt international: PCT/FR2008/051923
(87) Numéro de publication internationale: WO 2009/056746

(56) Documents cités:
- EP-A- 0 162 564
- WO-A2-02/18133
- DE-A1- 4 409 329
- FR-A- 2 828 220
- FR-A- 2 884 589
- JP-A- 2002 333 092
- US-A- 5 418 031
- US-A1- 2006 125 158

## Description

La présente invention concerne un nouveau matériau thermoisolant comprenant un matériau textile non-tissé épais, constitué essentiellement de fibres organiques et de particules de faible taille. L'invention concerne également l'utilisation d'un tel matériau pour l'isolation thermique de bâtiments.

Les laines minérales, telles que les laines de verre et laines de roche, constituent environ les deux tiers du volume des isolants thermiques utilisés actuellement dans le bâtiment. Depuis la naissance du besoin d'isolation thermique des bâtiments, suite au premier choc pétrolier du milieu des années 70, ces matériaux d'isolation n'ont guère évolué. Pourtant, les exigences d'isolation n'ont pas cessé de croître depuis, et le gain de performance exigé s'est donc principalement traduit par une augmentation des épaisseurs des matériaux utilisés. Ainsi, les laines minérales présentent actuellement une conductivité thermique théorique de l'ordre de 0,034 à 0,058 W/m.K (0.040 W/m.K en moyenne), ce qui implique que l'obtention d'une résistance thermique suffisante selon les préconisations et réglementations thermiques en vigueur pour la construction, de l'ordre de 2,4 m²K/W pour les murs de bâtiments et de l'ordre de 4,5 m²K/W pour les toitures, nécessite la pose de ces matériaux en une épaisseur comprise entre 8 et 20 cm environ.

Par ailleurs, le secteur de l'habillement, en permanente évolution, a généré, en raison des attentes en termes de propriétés, de coûts et de contraintes liés à l'utilisation sur l'homme, de très nombreux développements de textiles, tant en ce qui concerne la nature et la forme des fibres qu'en ce qui concerne leur mode d'assemblage en produits textiles. On a ainsi créé ces dernières années une grande variété de produits textiles dits « techniques » présentant des propriétés nouvelles telles qu'une bonne résistance au feu, un comportement hydrique différentiel, une haute résistance mécanique etc.

Certains produits textiles sont déjà utilisés dans le secteur du bâtiment, soit comme renfort structurel du bâti, soit comme barrière à l'eau, à la vapeur et à l'air, soit encore pour tenter de mieux l'isoler. Cependant, à ce jour, les matériaux textiles utilisés n'ont encore jamais atteint les performances thermiques des produits d'isolation classiques à base de laine de roche ou laine de verre et n'ont jamais pu être certifiés selon la norme EN 13172 quant à leurs performances thermiques réelles. Le document FR 2 828 220 A divulgue un matériau thermoisolant destiné à être utilisé pour l'isolation thermique de bâtiments, comportant un matériau textile non-tissé ayant une épaisseur d'au moins 30 mm constitué essentiellement :
(a) de fibres organiques d'une finesse comprise entre 0,0025 dtex et 4,5 dtex, et
(b) d'au moins une poudre métallique à l'état non oxydé.
La Demanderesse, dans le cadre de ses recherches visant à développer de nouveaux produits d'isolation du bâtiment, a découvert que certains matériaux textiles particuliers, connus dans le domaine de l'habillement, pouvaient être fabriqués en des épaisseurs jusqu'ici inexistantes pour ces matériaux et être alors utilisés pour répondre à une problématique d'isolation thermique de bâtiments. Une demande de brevet français et une demande de brevet européen ayant pour objet un tel matériau textile non-tissé épais ont été déposées respectivement le 30 mai 2006 et le 28 mai 2007 par la Demanderesse, sous les numéros FR 06 04 822 et EP 07109025.2.

Dans le cadre de ses recherches visant à mettre au point des matériaux thermoisolants toujours plus performants, la Demanderesse a essayé d'abaisser encore la conductivité thermique de ces matériaux textiles non-tissés épais ou bien d'abaisser la masse volumique de ces matériaux sans pour autant augmenter leur conductivité thermique.

En effet, la réduction de la masse volumique de produits d'isolation thermique se traduit généralement, au-delà d'un certain seuil, par une augmentation de la conductivité thermique apparente également appelée « transmittivité thermique », due principalement à l'augmentation de la transparence desdits matériaux au rayonnement thermique, donc de la contribution radiative à la transmittivité thermique, également appelée « radiativité » (EN ISO 9288).

Une approche intéressante pour diminuer la radiativité des matériaux d'isolation thermique a été l'ajout de particules réfléchissant et/ou absorbant le rayonnement thermique, par exemple des poudres de charbon, de graphite, de métaux ou d'oxydes métalliques.

La Demanderesse, dans le cadre d'essais pour tester et mettre au point de nouveaux matériaux particulaires, susceptibles de réduire la radiativité du matériau textile, a découvert l'importance déterminante d'une caractéristique physique particulière des additifs particulaires susceptibles d'être incorporés dans des matériaux thermoisolants de faible masse volumique. Cette caractéristique physique est l'émissivité des matériaux formant les poudres ajoutées.

Lorsqu'un rayonnement électromagnétique arrive à la surface d'un corps opaque, il peut être soit réfléchi soit absorbé puis réémis par ledit corps. L'importance relative des fractions de rayonnement réfléchi d'une part et de rayonnement absorbé et réémis d'autre part dépend de la nature chimique du corps considéré.

On définit ainsi l'émissivité d'un corps réel comme étant le rapport de la quantité de rayonnement émis par ce corps à une température donnée au rayonnement émis, à la même température, par le corps noir qui, par définition, absorbe et réémet la totalité du rayonnement qu'il reçoit. Les méthodes de détermination de l'émissivité par spectrométrie sont familières à l'homme du métier et des valeurs d'émissivité de nombreux matériaux sont disponibles sous forme de tables (CRC Handbook of Chemistry and Physics, 60ème Edition ; Handbook of Optical Constants of Solids, volume 2, Edward D. Palik.)

Le mérite de la Demanderesse a été de découvrir que toutes les poudres susceptibles d'être incorporées dans un matériau textile thermoisolant afin de réduire la conductivité thermique de celui-ci n'étaient pas équivalentes et que l'émissivité du matériau formant la poudre était un paramètre déterminant permettant de prévoir l'efficacité de la poudre en termes de réduction de la radiativité. La Demanderesse a ainsi constaté qu'une poudre réduisait d'autant plus efficacement la radiativité, c'est-à-dire la transparence au rayonnement infrarouge, d'un matériau textile non tissé que son émissivité était faible.

Lors de l'incorporation de poudres métalliques à faible émissivité dans des matériaux textiles à base de fibres organiques, la Demanderesse a toutefois rencontré un problème lié à surface relativement faible, disponible pour la fixation des particules. En effet, en dépit du fait que la radiativité d'un matériau est en principe d'autant plus réduite que la quantité de particules à faible émissivité est importante, on a observé, au-delà d'une certaine quantité de poudre, une augmentation de la conductivité, c'est-à-dire une diminution du pouvoir isolant du matériau. La Demanderesse attribue cette augmentation de la conductivité thermique globale du matériau à la conduction thermique solide entre particules métalliques en contact direct les unes avec les autres. Il est ainsi apparu que, lorsqu'on incorporait des particules métalliques à faible émissivité dans des matériaux thermoisolants textiles à base de fibres organiques, il était essentiel de ne pas dépasser une certaine densité de particules dans le matériau.

Ce problème, attribué à la conduction solide directe entre particules métalliques, s'est avéré négligeable, voir inexistant, pour des particules similaires non métalliques. Des particules non métalliques, ont en effet une conductivité solide considérablement plus faible que les matériaux métalliques. Ils présentent toutefois une émissivité plus importante et, pour obtenir une réduction satisfaisante de la radiativité, il est alors nécessaire d'utiliser des quantités relativement plus importantes que pour les matériaux métalliques à faible émissivité, mentionnés ci-dessus. La quantité de particules non métalliques n'est ainsi en principe limitée que par la surface de fixation disponible sur les fibres.

L'adjectif « métallique » tel qu'il est utilisé dans la présente invention pour décrire le matériau constituant les particules, signifie que ledit matériau est essentiellement constitué d'un métal présent à l'état d'oxydation zéro. Le terme « non métallique » désigne un matériau exempt d'éléments métalliques ou dans lequel les éléments métalliques sont à un degré d'oxydation différent de zéro.

La Demanderesse a également observé que l'efficacité des poudres était d'autant plus importante que leurs dimensions étaient petites. Cette augmentation de l'efficacité liée à la diminution de la taille des particules connaît toutefois une limite au-delà de laquelle les particules ne réfléchissent plus le rayonnement reçu et deviennent totalement inefficaces en tant qu'agents réduisant la radiativité des matériaux plastiques les contenant. La Demanderesse a ainsi constaté que les particules perdaient leur pouvoir réfléchissant lorsque leur taille devenait significativement inférieure à la longueur d'onde du rayonnement infrarouge dont il s'agit d'empêcher la propagation.

La présente invention a par conséquent pour objet un matériau isolant thermique, également appelé matériau thermoisolant, destiné à être utilisé pour l'isolation thermique de bâtiments, comportant un matériau textile non-tissé ayant une épaisseur d'au moins 30 mm constitué essentiellement :
(a) de fibres organiques d'une finesse comprise entre 0,0025 dtex et 4,5 dtex, de préférence entre 0,1 et 1 dtex, et
(b) de 0,1 % à 12 % en poids, rapporté aux fibres organiques (a), d'au moins une poudre métallique à l'état non oxydé, de diamètre équivalent moyen compris entre 0,5 et 30 µm, constituée d'un matériau métallique présentant, à l'état massif, une émissivité inférieure à 0,2, de préférence inférieure à 0,1, et **optionnellement**
(c) de 0,2 à 20 % en poids, rapporté aux fibres organiques (a), d'au moins une poudre non métallique, de diamètre équivalent moyen compris entre 0,5 et 30 µm, d'un matériau présentant à l'état massif une conductivité thermique inférieure à 20 W.m⁻¹K⁻1.

L'invention a en outre pour objet un procédé d'isolation thermique d'un bâtiment, comprenant le recouvrement d'une ou plusieurs surfaces extérieures ou intérieures dudit bâtiment par une ou plusieurs couches superposées d'un matériau thermoisolant tel que défini ci-dessus, ou l'incorporation d'une ou de plusieurs couches d'un tel matériau dans la structure des parois dudit bâtiment, l'épaisseur totale de l'ensemble des couches superposées étant suffisante pour obtenir une résistance thermique au moins égale à 2.4 m².K/W pour l'isolation thermique des murs et au moins égale à 4.5 m².K/W pour l'isolation thermique des toitures.

Enfin, l'invention a pour objet l'utilisation d'un matériau thermoisolant tel que défini ci-dessus pour l'isolation thermique des parois d'un bâtiment. Cette utilisation concerne l'isolation thermique aussi bien pour la construction de bâtiments neufs que pour la rénovation de bâtiments anciens.

La signification du terme « non-tissé » tel que utilisé dans la présente invention est celle définie par l'Organisation Internationale de Normalisation dans la norme ISO 9002 (1988). On peut indiquer ici, de manière simplifiée, qu'un matériau textile non-tissé se caractérise généralement par l'absence de fils : les fibres individuelles sont incorporées directement dans le produit textile sans être préalablement assemblées en forme de fils qui serviront ensuite à l'élaboration de l'étoffe.

Le matériau textile non-tissé de la présente invention est constitué essentiellement de fibres organiques d'une finesse comprise entre 0,0025 dtex et 4,5 dtex, autrement dit lesdites fibres représentent au moins 90 % en poids, de préférence au moins 95 % en poids et idéalement au moins 98 % en poids de l'ensemble des fibres formant ledit matériau textile non textile.

La partie complémentaire, c'est-à-dire les au plus 10 % en poids, de préférence au plus 5 % en poids et en particulier au plus 2 % en poids, peuvent être formés par exemple par des fibres minérales, telles que des laines de verre ou laines de roche, ou encore par des fibres organiques plus grosses destinées par exemple à renforcer la résistance mécanique du matériau non tissé.

L'épaisseur du matériau textile non tissé à l'état non comprimé, est de préférence au moins égale à 80 %, en particulier au moins égale à 90 %, et idéalement au moins égale à 95 % de l'épaisseur totale du matériau thermoisolant.

Celui-ci peut en effet comporter, outre le matériau textile non tissé, une ou plusieurs couches de protection, de renfort, d'imperméabilisation etc. formées par exemple par des plaques, des films ou feuilles en matière plastique, expansée ou non, ou par d'autres types de textiles tissés ou non tissés.

Dans un mode de réalisation particulièrement préféré, le matériau thermoisolant selon l'invention ne comprend pas d'autres couches que celle du matériau textile non-tissé formé de fibres organiques fines.

Le matériau textile non-tissé de la présente invention, formé par les fibres et les particules métalliques, a de préférence une conductivité thermique λ, mesurée selon la norme ISO 8301, inférieure à 0,045 W/m.K, de préférence inférieure à 0,038 W/m.K.

Les valeurs de conductivité thermique indiquées dans la présente demande doivent être comprises comme étant celles du matériau à l'équilibre d'hydratation.

L'utilisation de fibres organiques fines dans les matériaux selon l'invention, a permis d'obtenir des matériaux d'isolation thermique pour le bâtiment présentant des conductivités thermiques équivalentes voire inférieures à celles des matériaux à base de fibres minérales. Ceci est dû, en partie, au faible coefficient de conduction thermique des matériaux organiques formant les fibres.

Les fibres organiques peuvent être des fibres naturelles, artificielles ou synthétiques, ou un mélange de telles fibres. On entend par fibres artificielles des fibres d'origine naturelle ayant subi un traitement chimique de surface ou dans la masse.

Bien que des fibres naturelles telles que la laine ou la soie présentent de bonnes caractéristiques d'isolation thermique, on préfère tout particulièrement utiliser dans les matériaux thermoisolants de la présente invention des fibres artificielles et/ou des fibres à base de polymères synthétiques qui, non seulement ont un excellent pouvoir d'isolation thermique, mais peuvent en outre être obtenus à très faible coût.

La très grande variété de polymères synthétiques connus et utilisés couramment dans le domaine de l'habillement, permet en outre de préparer des matériaux ayant un profil de propriétés mécaniques et physico-chimiques « sur mesure ». Un choix approprié de polymères permet ainsi de conférer aux fibres des propriétés antibiotiques (bactéricides, fongicides), de moduler leurs propriétés mécaniques (élasticité, compressibilité, rigidité, résistance à la chaleur), hydriques (perméabilité à la vapeur d'eau, capillarité) ou chimiques (résistance aux solvants, à l'hydrolyse, au rayonnement) ou encore de conférer aux matériaux des fonctions décoratives, par exemple grâce à l'incorporation de colorants ou de pigments.

De plus, le fait d'utiliser pour les matériaux thermoisolants de la présente invention des fibres utilisées habituellement dans le domaine de l'habillement permet de réduire considérablement les risques d'allergie lorsque le matériau vient en contact avec la peau, notamment dans le cadre de sa fabrication ou de sa mise en place.

On peut citer à titre d'exemples de polymères synthétiques préférés pour la fabrication des fibres synthétiques utilisées dans la présente invention, les polyesters, notamment les poly(alkylène téréphtalates) tels que le poly(éthylène téréphtalate), les polyamides tels que le polyamide 6 ou le polyamide 6,6, les polymères acryliques tels que le polyacrylonitrile, les polyuréthannes tels que l'élasthane, le poly(alcool vinylique), les polyoléfines telles que le polyéthylène ou le polypropylène, les polymères phénoliques, les polyacrylates, les polymères vinyliques chlorés ou fluorés tels que le poly(chlorure de vinyle), l'aramide, les poly(arylétheréthercétone) (PEEK), les poly(benzimidazole) (PBI), les poly(éther imide) (PEI) et les poly(sulfure de phénylène) (PPS)

On peut citer à titre d'exemples de fibres d'origine naturelle, les fibres cellulosiques choisies parmi le coton, le lin, le jute, le chanvre et autres fibres végétales, et les fibres protéiniques choisies parmi la soie, la laine et les poils et plumes d'animaux. Bien que ces fibres naturelles soient généralement d'un coût supérieur à celui des fibres synthétiques, leur utilisation peut s'avérer très intéressante à plus long terme dans le cadre d'un développement durable.

La conductivité thermique des matériaux textiles non tissés selon la présente invention dépend toutefois non seulement de la nature chimique des fibres synthétiques utilisées, mais également de la finesse de celles-ci, de leur affinité pour l'eau, de leur mode d'assemblage en nappes de non-tissés et de l'épaisseur de ces nappes non tissées.

La Demanderesse a en effet réalisé de nombreux essais avec des textiles tissés ou tricotés en utilisant différentes finesses de fibres, plusieurs grosseurs de fils, et en fabriquant des matériaux textiles de plusieurs masses volumiques et en plusieurs épaisseurs, éventuellement par superposition de plusieurs couches de textiles. Aucun de ces essais n'a malheureusement permis d'obtenir des conductivités thermiques équivalentes à celles des produits à base de fibres minérales. Le caractère non-tissé du matériau textile utilisé dans la présente invention est par conséquent une caractéristique essentielle.

Comme indiqué ci-dessus, les fibres formant le matériau textile thermoisolant de la présente invention ont de préférence une très faible affinité pour l'eau. Cette faible affinité pour l'eau se manifeste par un caractère peu hydrophile et/ou par une hygroscopicité peu élevée.

Les fibres organiques utilisées dans la présente invention sont de préférence des fibres non hydrophiles au sens de la norme NFP75-305.

L'hygroscopicité des fibres peut être évaluée selon deux méthodes différentes et les fibres utilisées dans la présente invention satisfont au moins à l'un des deux essais d'évaluation suivants, de préférence aux deux :
(1) Taux d'humidité massique à l'équilibre mesuré à 23°C et 50 % d'humidité relative selon la norme NF EN 12429. Ce taux d'humidité doit être inférieur à 4 %.
(2) Taux massique d'eau absorbée, mesuré en essai d'immersion partielle selon la norme NF EN 12087. Ce taux massique d'eau absorbée doit être inférieur à 10 %.

La plupart des fibres naturelles, telles que le coton, sont de nature plutôt hydrophile et ne satisfont pas aux critères ci-dessus. Il est par conséquent fortement recommandé de les soumettre, avant ou après assemblage sous forme de non-tissés, à des traitements connus afin de les rendre non hydrophiles (au sens de la norme NFP75-305) et/ou non hygroscopiques (au sens des normes NF EN 12429 ou NF EN 12087).

Par ailleurs, comme indiqué ci-dessus, les fibres organiques formant le matériau textile non tissé de la présente invention ont une finesse, exprimée par leur poids par unité de longueur, comprise entre 0,0025 décitex et 4,5 décitex (1 décitex = 0,1 g/1000 m), de préférence entre 0,1 décitex et 1 décitex. Pour des fibres à section circulaire, qui ne représentent toutefois qu'un mode de réalisation particulier, cette gamme de finesse correspond à peu près à un diamètre de fibres compris entre 0,5 µm et 20 µm, de préférence compris entre 3 µm et 10 µm.

Des conductivités thermiques particulièrement intéressantes ont par ailleurs été obtenues avec des fibres creuses.

La masse volumique préférée des matériaux non tissés est avantageusement comprise entre 5 et 50 kg/m³, de préférence entre 10 et 40 kg/m³ et en particulier entre 15 et 35 kg/m³. En dessous de 5 kg/m³ en effet, la conductivité thermique est trop élevée et dépasse généralement la valeur de 65 kg/m³, limite supérieure pour la certification des isolants thermiques. Au-delà d'une masse volumique de 50 kg/m³, le gain en pouvoir isolant devient négligeable par rapport à l'augmentation du coût de production des matériaux plus denses.

La longueur des fibres organiques utilisées n'a pas une importance capitale sur la conductivité thermique des matériaux thermoisolants de la présente invention. Cette longueur est généralement choisie en fonction du procédé de fabrication des nappes non tissées.

Un autre critère d'une importance déterminante pour l'utilisation dans le domaine du bâtiment est la résistance au feu des matériaux thermoisolants. Le matériau thermoisolant a de préférence une tenue au feu le classant dans les catégories A à D, de préférence A à C, des Euroclasses de réaction au feu. Cette classification des Euroclasses reprend la classification de la norme NF EN 13501, qui utilise les méthodes d'essai des normes NF EN 1363, 1364, 1365 et 1366, concernant les essais d'évaluation de résistance au feu des matériaux de construction, y compris les matériaux isolants thermiques. Cette résistance au feu peut être obtenue de manière connue, par exemple par addition ou imprégnation du matelas non tissé avec des agents ignifugeants appropriés.

Comme indiqué en introduction, le matériau thermoisolant de la présente invention contient, outre les fibres organiques fines, des particules métalliques à faible granulométrie.

Ces particules peuvent être soit des particules métalliques à faible émissivité (inférieure à 0,2) soit des particules non métalliques à faible conductivité. La faible émissivité de la première catégorie de particules est fortement liée à l'état non oxydé du métal.

La Demanderesse a constaté que la plupart des matériaux particulaires métalliques utilisés couramment en tant que réducteurs de la radiativité de matériaux thermoisolants, et en particulier l'aluminium, le fer et le cuivre non alliés, étaient relativement sensibles à la corrosion lorsqu'ils étaient sous forme de fines particules et exposés à des températures élevées et/ou à une humidité importante. Or, les oxydes et hydroxydes métalliques ont généralement une émissivité du rayonnement infrarouge nettement supérieure à celle des métaux correspondants et l'oxydation progressive de ces derniers entraîne par conséquent une baisse du pouvoir d'isolation thermique des produits les contenant. Pour assurer la pérennité du pouvoir isolant des matériaux isolants thermiques contenant des particules métalliques, il est par conséquent important de sélectionner des métaux résistant à la corrosion dans des conditions d'humidité et/ou de température élevée.

On détermine la résistance à la corrosion des métaux choisis pour constituer les particules utilisables dans les matériaux textiles de la présente invention en mesurant l'émissivité des poudres de ces métaux avant et après un essai de corrosion réalisé selon les normes ISO 9227, 3231 et 21207. Cette résistance à l'oxydation est de préférence telle que l'augmentation de l'émissivité de la poudre après oxydation dans les conditions indiquées soit inférieure à 0,1.

On peut citer en tant que matériaux métalliques qui satisfont aux critères d'émissivité et de résistance à la corrosion décrits ci-dessus les alliages métalliques choisis parmi ceux à base de cuivre, de zinc, d'étain, de titane, de zirconium, de niobium, de tantale, d'aluminium, de fer et de nickel. Ladite poudre peut également être constituée d'un matériau métallique choisi parmi le titane, le zirconium, le hafnium, le vanadium, le niobium, le tantale, le silicium, l'étain, le nickel, le molybdène, le manganèse, et le chrome.

Ladite poudre est de préférence constituée d'un matériau métallique choisi dans le groupe formé par les cuivres faiblement alliés, les laitons, de préférence les laitons à teneur en zinc inférieure ou égale à 15% en poids, les bronzes, de préférence les bronzes à teneur en étain inférieure ou égale à 13% en poids, les cupro-aluminium, de préférence les cupro-aluminium contenant du nickel, les cupro-nickel, les maillechorts, les cupro-silicium, les fontes, de préférence les fontes fortement alliées au chrome et au silicium, les aciers faiblement alliés, de préférence les aciers faiblement alliés au Cr - Ni et au Cr - Mo, les aciers fortement alliés, de préférence les aciers fortement alliés au Cr - Ni et au Cr - Mo, les aciers inoxydables, de préférence les aciers inoxydables austénitiques, austéno-ferritiques et martensitiques, les alliages Fe - Ni - Cr, de préférence les alliages Fe - Ni - Cr super austénitiques, les alliages Ni - Cu, les alliages Ni - Cr, les alliages Ni - Fe, les alliages Ni - Mo, les alliages d'aluminium de série 4000, de série 5000 et de série 6000, de préférence les alliages d'aluminium de série 5000, les alliages à base d'étain, et les alliages à base d'étain et de plomb.

On peut citer à titre d'exemples de matériaux formant les particules non métalliques à faible conductivité thermique, utilisés dans la présente invention les matériaux minéraux synthétiques tels que les oxydes, carbures, nitrures, carbonitrures, carbonates, silicates, aluminates et sulfures de métaux, en particulier de métaux de transition, les matériaux minéraux naturels comme les roches et les matériaux minéraux artificiels comme les laitiers, les cendres et roches modifiées.

Parmi ces matériaux, on préfère en particulier les matériaux minéraux naturels ou artificiels en raison de leur faible coût et de leur grande disponibilité sur le marché. Ces matériaux artificiels peuvent être en particulier des déchets issus d'autres procédés industriels et l'incorporation de ces matériaux dans les matériaux thermoisolants de la présente invention constitue alors une voie intéressante de recyclage ou de valorisation de ces déchets.

Les poudres métalliques non oxydées ou les poudres non métalliques à faible conductivité thermique, utilisées dans la présente invention, ont de préférence un diamètre équivalent moyen compris entre 2 et 10 µm, en particulier entre 3 et 7,5 µm.

Le « diamètre équivalent » au sens où ce terme est utilisé dans la présente demande, est le diamètre du cercle possédant la même surface que la surface projetée de la particule orientée aléatoirement. Le diamètre équivalent moyen d'une poudre, c'est-à-dire d'une population de particules ayant une distribution granulométrique donnée, peut être mesuré par exemple par diffraction laser.

Le diamètre équivalent moyen de la poudre n'est toutefois pas la seule caractéristique physique à prendre en considération pour optimiser l'efficacité de celle-ci.

En effet, comme expliqué précédemment, la Demanderesse a découvert que l'efficacité des particules métalliques était d'autant plus grande que leur dimension était petite mais que cette dimension ne devait pas être sensiblement inférieure à la longueur d'onde du rayonnement incident. Or, le rayonnement « incident » dont il s'agit d'empêcher la propagation ne peut pas être caractérisé par une longueur d'onde donnée, mais est en fait un spectre de rayonnement, plus précisément le spectre d'émission des fibres organiques du matériau textile, dont le comportement radiatif est celui d'un corps gris, c'est-à-dire respectant la répartition d'intensité spectrale du corps noir qui varie en fonction de la température mais dont l'allure générale est connue. Ce spectre bien connu du corps noir n'a pas la forme d'une courbe gaussienne mais présente un maximum d'émission décalé vers les faibles longueurs d'ondes du spectre. Dans un mode de réalisation particulièrement préféré de la présente invention, la distribution granulométrique des particules présente une allure sensiblement similaire à celle du spectre d'émission du corps noir, autrement dit la distribution granulométrique des particules métalliques présente de préférence un maximum situé aux faibles diamètres équivalents avec une traine dans la zone des dimensions plus importantes. Une telle distribution non gaussienne peut être obtenue, de manière connue, par un mélange de plusieurs poudres. Il est bien entendu possible d'obtenir la distribution granulométrique souhaitée en mélangeant plusieurs poudres constituées de matériaux différents.

L'ajout de particules métalliques à l'état non oxydé est efficace en des quantités relativement faibles, généralement inférieures à 6 % en poids.

La ou les poudre(s) métallique(s) est/sont de préférence présente(s) à raison de 3 à 6%, en poids, rapporté au poids des fibres organiques fines.

L'ajout de particules non métalliques est efficace en des quantités généralement inférieures à 10 % en poids.

La ou les poudre(s) non métallique(s) est/sont de préférence présente(s) à raison de 5 à 10%, en poids, rapporté au poids des fibres organiques fines.

Les produits textiles non-tissés peuvent être préparés selon des procédés bien connus dans le domaine du textile et dans le domaine de la fabrication du papier. La formation des nappes de fibres peut se faire par exemple
- selon la voie sèche à partir de fibres préexistantes par nappage mécanique ou pneumatique. Ce procédé utilise généralement des fibres courtes, ayant une longueur de 25 mm à 50 mm, ou des fibres dites longues ayant une longueur de 50 à 200 mm.
- par voie fondue : le polymère fondu est extrudé sous forme de filaments fins qui sont étirés jusqu'à la finesse souhaitée voire jusqu'à la rupture du filament. On obtient ainsi soit des nappes dites « filées-liées » (*spun-bonded*) si le taux d'étirage appliqué n'entraîne pas la rupture des filaments (filaments de longueur infinie), soit des produits obtenus par « fusion-soufflage » (*melt-blowing*) lorsque le taux d'étirage est tel que les filaments s'affinent jusqu'à la rupture. La longueur des fibres est alors généralement comprise entre 10 mm et 50 mm selon le taux d'étirage utilisé.
- par voie humide : une suspension aqueuse de fibres courtes (longueur de l'ordre de 10 mm) s'écoule sur une grille en mouvement qui a pour fonction de retenir les fibres. Le dépôt obtenu est ensuite essoré et séché dans un flux d'air chaud ;
- par voie « air-laid » : des fibres courtes, généralement de l'ordre de 10 mm, sont mises en suspension dans un flux d'air puis aspirées et déposées en nappes sur un convoyeur en mouvement.

Après formation des nappes de fibres organiques, celles-ci sont ensuite généralement soumises à une étape de
- liage mécanique, par exemple par aiguilletage ou hydroliage,
- liage chimique par application d'un liant approprié qui sera ensuite éventuellement soumis à une étape de polymérisation et/ou de réticulation. Le liant peut être déposé en une quantité allant de 5 à 60 % en masse rapporté à la masse de la nappe de fibres, ou
- liage thermique : des fibres ou particules thermofusibles déposées pendant ou après la formation de la nappe sont fondues par chauffage de celle-ci jusqu'à une température supérieure au point de fusion de ses composants. Ce chauffage peut se faire par exemple par calandrage entre deux cylindres chauffés ou encore dans un four à air chaud ;
   ou une combinaison de ceux-ci.

Bien entendu, les procédés de formation de nappes et de liage connus doivent être adaptés aux fortes épaisseurs des produits textiles de la présente invention.

La très faible taille des particules utilisées fait qu'elles sont très faciles à incorporer dans les matériaux textiles non tissés de la présente invention. Elles adhèrent facilement aux fibres par simple contact à sec. Elles peuvent également être fixées sur les fibres par projection d'une dispersion de particules, avant ou pendant le procédé d'assemblage des fibres. La fixation des particules peut être renforcée de manière connue par l'utilisation d'un adhésif appliqué préalablement sur les fibres, ou bien par chauffage du matériau jusqu'à une température qui se traduit par un début de ramollissement du polymère thermoplastique formant les fibres.

Le matériau textile non tissé utilisé dans le matériau thermoisolant de la présente invention a de préférence une épaisseur comprise entre 40 et 120 mm, en particulier une épaisseur comprise entre 50 et 100 mm.

La valeur supérieure de cette fourchette (120 mm) correspond, pour la limite supérieure de conductivité thermique revendiquée (0,045 W/m.K), à une résistance thermique d'environ 2,7 m²K/W, valeur légèrement supérieure à la valeur minimale réglementaire préconisée en construction neuve pour l'isolation de mûrs de bâtiments, égale à 2,4 m²K/W.

Le matériau thermoisolant selon l'invention peut se présenter sous différentes formes permettant son application sur ou dans les parois des bâtiments qu'il s'agit d'isoler. Il se présente de préférence sous forme d'une bande ou d'un rouleau de matériau continu qui peut être découpé selon les dimensions souhaitées lors de sa pose, ou bien sous forme d'éléments individuels, souples ou rigides, de préférence sous forme d'éléments individuels de forme rectangulaire, que l'on pourra poser les uns à côté des autres afin de couvrir une grande surface. Les bords des rouleaux, matelas, feuilles, plaques ou panneaux, peuvent éventuellement avoir des formes particulières ou comporter des dispositifs permettant de les assembler les uns aux autres en les superposant ou juxtaposant les uns aux autres.

L'utilisation de fibres organiques d'une finesse comprise entre 0,0025 dtex et 4,5 dtex et de particules minérales à faible granulométrie, sous forme de textile non tissé ayant une épaisseur minimale au moins égale à 30 mm, permet ainsi la fabrication d'un matériau thermoisolant qui constitue une alternative intéressante aux isolants thermiques à base de laines minérales. Les matériaux thermoisolants ainsi obtenus présentent des performances thermiques supérieures à celles de la plupart des laines minérales, que celles-ci soient additivées ou non de particules métalliques destinées à réduire la conductivité thermique des matériaux.

L'utilisation de fibres organiques et en particulier de fibres à base de polymères synthétiques permet en outre de conférer aux matériaux textiles non tissés d'autres propriétés intéressantes telles qu'une faible reprise d'humidité, des propriétés ignifugeantes satisfaisantes, une bonne résistance à la dégradation par des microorganismes, des propriétés mécaniques améliorées par rapport aux laines minérales (élasticité, résistance à la rupture en traction etc.). Les matériaux textiles non tissés utilisés ont en outre un pouvoir d'isolation sonore équivalent voire supérieur à celui des produits à base de laine minérale.

## Revendications

1. Matériau thermoisolant destiné à être utilisé pour l'isolation thermique de bâtiments, comportant un matériau textile non-tissé ayant une épaisseur d'au moins 30 mm constitué essentiellement :
(a) de fibres organiques d'une finesse comprise entre 0,0025 dtex et 4,5 dtex, de préférence entre 0,1 et 1 dtex, et
(b) de 0,1 % à 12 % en poids, rapporté aux fibres organiques (a), d'au moins une poudre métallique à l'état non oxydé, de diamètre équivalent moyen compris entre 0,5 et 30 µm, constituée d'un matériau métallique présentant, à l'état massif, une émissivité inférieure à 0,2, de préférence inférieure à 0,1.

2. Matériau thermoisolant selon la revendication 1, **caractérisé par le fait que** le matériau textile non-tissé a une conductivité thermique X, inférieure à 0,045 W/m.K, de préférence inférieure à 0,038 W/m.K.

3. Matériau thermoisolant selon la revendication 1, **caractérisé par le fait que** les fibres organiques sont des fibres naturelles, artificielles ou synthétiques, ou un mélange de telles fibres, de préférence des fibres synthétiques ou artificielles ou un mélange de telles fibres.

4. Matériau thermoisolant selon l'une des revendications 1 à 3, **caractérisé par le fait que** les fibres organiques sont des fibres non hydrophiles.

5. Matériau thermoisolant selon l'une quelconque des revendications précédentes, **caractérisée par le fait que** les fibres organiques sont des fibres synthétiques choisies parmi les fibres de polyester, de polyamide, de polymères acryliques, de polyuréthanne, de poly(alcool vinylique), de polyoléfines, de polymères phénoliques, de polyacrylates, de polymères vinyliques chlorés ou fluorés, d'aramide, de poly(arylétheréthercétone) (PEEK), de poly(benzimidazole) (PBI), de poly(éther imide) (PEI), et de polysulfure de phénylène) (PPS).

6. Matériau thermoisolant selon l'une quelconque des revendications précédentes, **caractérisé par le fait que** les fibres naturelles sont des fibres cellulosiques choisies parmi le coton, le lin, le jute, le chanvre et autres fibres végétales, ou des fibres protéiniques choisies parmi la soie, la laine et les poils et plumes d'animaux, ces fibres ayant de préférence subi un traitement les rendant non hydrophiles et/ou non hygroscopiques.

7. Matériau thermoisolant selon l'une quelconque des revendications précédentes, **caractérisé par le fait que** le matériau textile non tissé présente une masse volumique comprise entre 5 et 50 kg/m3, de préférence entre 10 et 40 kg/m3 et en particulier entre 15 et 35 kg/m3.

8. Matériau thermoisolant selon l'une quelconque des revendications précédentes, **caractérisé par le fait que** le matériau textile non-tissé a une épaisseur comprise entre 40 et 120 mm, de préférence entre 50 et 100 mm.

9. Matériau thermoisolant selon l'une quelconque des revendications précédentes, **caractérisé par le fait que** le matériau métallique des particules (b) à faible émissivité est choisi parmi ceux présentant une résistance à la corrosion telle que l'augmentation de l'émissivité de la poudre métallique après un essai d'oxydation, soit inférieure à 0,1.

10. Matériau thermoisolant selon l'une quelconque des revendications précédentes, **caractérisé par le fait que** le matériau métallique des particules (b) à faible émissivité est choisi parmi les alliages métalliques à base de cuivre, de zinc, d'étain, de titane, de zirconium, de niobium, de tantale, d'aluminium, de fer et de nickel et parmi le titane, le zirconium, le hafnium, le vanadium, le niobium, le tantale, le silicium, l'étain, le nickel, le molybdène, le manganèse, et le chrome.

11. Matériau thermoisolant selon l'une quelconque des revendications 1 à 8, comprenant en outre (c) de 0,2 à 20 % en poids, rapporté aux fibres organiques (a), d'au moins une poudre non métallique de diamètre équivalent moyen compris entre 2 et 10 µm, d'un matériau présentant à l'état massif une conductivité thermique inférieure à 20 W.m-1K-1
et optionnellement **caractérisé par le fait que** les
particules non métalliques (c) sont choisies parmi les
matériaux minéraux synthétiques tels que les oxydes, carbures, nitrures, carbonitrures, carbonates, silicates,
aluminates et sulfures de métaux, en particulier de métaux de transition, les matériaux minéraux naturels comme les roches et les matériaux minéraux artificiels comme les laitiers, les cendres et les roches modifiées.

12. Matériau thermoisolant selon la revendication 11, **caractérisé par le fait que** les particules non métalliques (c) sont choisies parmi les roches, les laitiers, les cendres et les roches modifiées.

13. Matériau thermoisolant selon l'une quelconque des revendications précédentes, **caractérisé par le fait que** les poudres ont un diamètre équivalent moyen compris entre 2 et 10 µm, de préférence entre 3 et 7,5 µm.

14. Matériau thermoisolant selon l'une quelconque des revendications précédentes, **caractérisé par le fait que** le matériau textile non-tissé comprend de 3 à 6% en poids de poudre métallique (b) à faible émissivité.

15. Matériau thermoisolant selon l'une quelconque des revendications 1 à 13, **caractérisé par le fait que** le matériau textile non-tissé comprend de 5 à 10 % en poids de poudre non-métallique (c) à faible conductivité thermique.

16. Procédé d'isolation thermique d'un bâtiment, comprenant le recouvrement d'une ou plusieurs surfaces extérieures ou intérieures dudit bâtiment par une ou plusieurs couches superposées d'un matériau thermoisolant tel que défini dans les revendications précédentes, ou l'incorporation d'une ou de plusieurs couches d'un tel matériau dans la structure des parois dudit bâtiment, l'épaisseur totale de l'ensemble des couches superposées étant suffisante pour obtenir une résistance thermique au moins égale à 2.4 m2.K/W pour l'isolation thermique des murs et au moins égale à 4.5 m2.K/W pour l'isolation thermique des toitures.

## Patentansprüche

1. Wärmeisolierendes Material, das dazu bestimmt ist, für die Wärmeisolierung von Gebäuden verwendet zu werden, umfassend ein textiles Vliesmaterial mit einer Dicke von mindestens 30 mm, das im Wesentlichen aus Folgendem gebildet ist:
(a)organischen Fasern mit einer Feinheit zwischen 0,0025 dtex und 4,5 dtex, vorzugsweise zwischen 0,1 und 1 dtex, und
(b)0,1 Gew.% bis 12 Gew.%, bezogen auf die organischen Fasern (a), von mindestens einem Metallpulver im nicht oxidierten Zustand mit einem mittleren Äquivalentdurchmesser zwischen 0,5 und 30 µm, das aus einem metallischen Material gebildet ist, das im massiven Zustand einen Emissionsgrad von unter 0,2, vorzugsweise von unter 0,1, aufweist.

2. Wärmeisolierendes Material nach Anspruch 1, **dadurch gekennzeichnet, dass** das textile Vliesmaterial eine Wärmeleitfähigkeit X von unter 0,045 W/m.K, vorzugsweise von unter 0,038 W/m.K aufweist.

3. Wärmeisolierendes Material nach Anspruch 1, **dadurch gekennzeichnet, dass** die organischen Fasern natürliche, künstliche oder synthetische Fasern oder eine Mischung solcher Fasern, vorzugsweise synthetische oder künstliche Fasern oder eine Mischung solcher Fasern sind.

4. Wärmeisolierendes Material nach einem der Ansprüche 1 bis 3, **dadurch gekennzeichnet, dass** die organischen Fasern nicht hydrophile Fasern sind.

5. Wärmeisolierendes Material nach einem der vorhergehenden Ansprüche, **dadurch gekennzeichnet, dass** die organischen Fasern synthetische Fasern sind, die ausgewählt sind aus den Polyester-, Polyamid-, Acrylpolymer-, Polyurethanfasern, den Poly(vinylalkohol)-Fasern, den Fasern aus Polyolefinen, aus Phenolpolymeren, aus Polyacrylaten, aus chlorierten oder fluorierten Vinylpolymeren, aus Aramid, aus Poly(aryletheretherketon) (PEEK), aus Poly(benzimidazol) (PBI), aus Poly(ether-imid)(PEI), und aus (Poly-Phenylen-Sulfid) (PPS).

6. Wärmeisolierendes Material nach einem der vorhergehenden Ansprüche, **dadurch gekennzeichnet, dass** die natürlichen Fasern Cellulosefasern sind, die ausgewählt sind aus Baumwolle, Leinen, Jute, Hanf und anderen Pflanzenfasern, oder Proteinfasern, die ausgewählt sind aus Seide, Wolle und Tierhaaren und -federn, wobei diese Fasern vorzugsweise einer Behandlung unterzogen worden sind, die sie nicht hydropil und/oder nicht hygroskopisch gemacht haben.

7. Wärmeisolierendes Material nach einem der vorhergehenden Ansprüche, **dadurch gekennzeichnet, dass** das textile Vliesmaterial eine Dichte aufweist, die zwischen 5 und 50 kg/m³, vorzugsweise zwischen 10 und 40 kg/m³ und insbesondere zwischen 15 und 35 kg/m³ beträgt.

8. Wärmeisolierendes Material nach einem der vorhergehenden Ansprüche, **dadurch gekennzeichnet, dass** das textile Vliesmaterial eine Dicke aufweist, die zwischen 40 und 120 mm, vorzugsweise zwischen 50 und 100 mm beträgt.

9. Wärmeisolierendes Material nach einem der vorhergehenden Ansprüche, **dadurch gekennzeichnet, dass** das metallische Material der Partikel (b) mit niedrigem Emissionsvermögen ausgewählt ist aus jenen, die eine derartige Korrosionsbeständigkeit aufweisen, dass die Erhöhung des Emissionsvermögens des Metallpulvers nach einem Oxidationstest niedriger als 0,1 ist.

10. Wärmeisolierendes Material nach einem der vorhergehenden Ansprüche, **dadurch gekennzeichnet, dass** das metallische Material der Partikel (b) mit niedrigem Emissionsvermögen ausgewählt ist aus den Metalllegierungen auf Basis von Kupfer, Zink, Zinn, Titan, Zirkonium, Niob, Tantal, Aluminium, Eisen und Nickel und aus Titan, Zirkonium, Hafnium, Vanadium, Niob, Tantal, Silizium, Zinn, Nickel, Molybdän, Mangan und Chrom.

11. Wärmeisolierendes Material nach einem der Ansprüche 1 bis 8, ferner umfassend (c) 0,2 bis 20 Gew.%, bezogen auf die organischen Fasern (a), von mindestens einem nichtmetallischen Pulver mit einem mittleren Äquivalentdurchmesser zwischen 2 und 10 µm aus einem Material, das im massiven Zustand eine Wärmeleitfähigkeit von unter 20 W.m⁻¹K⁻¹ aufweist, und gegebenenfalls **dadurch gekennzeichnet, dass** die nichtmetallischen Partikel (c) ausgewählt sind aus den synthetischen mineralischen Materialien wie Oxiden, Carbiden, Nitriden, Carbonitriden, Carbonaten, Silikaten, Aluminaten und Metallsulfiden, insbesondere von Übergangsmetallen, den natürlichen mineralischen Materialien wie Gesteinen und den künstlichen mineralischen Materialien wie Schlacken, Aschen und modifizierten Gesteinen.

12. Wärmeisolierendes Material nach Anspruch 11, **dadurch gekennzeichnet, dass** die nichtmetallischen Partikel (c) ausgewählt sind aus Gesteinen, Schlacken, Aschen und modifizierten Gesteinen.

13. Wärmeisolierendes Material nach einem der vorhergehenden Ansprüche, **dadurch gekennzeichnet, dass** die Pulver einen mittleren Äquivalentdurchmesser zwischen 2 und 10 µm, vorzugsweise zwischen 3 und 7,5 µm aufweisen.

14. Wärmeisolierendes Material nach einem der vorhergehenden Ansprüche, **dadurch gekennzeichnet, dass** das textile Vliesmaterial 3 bis 6 Gew.% Metallpulver (b) mit niedrigem Emissionsvermögen aufweist.

15. Wärmeisolierendes Material nach einem der Ansprüche 1 bis 13, **dadurch gekennzeichnet, dass** das textile Vliesmaterial 5 bis 10 Gew.% nichtmetallisches Pulver (c) mit geringer Wärmeleitfähigkeit aufweist.

16. Verfahren zur Wärmeisolierung eines Gebäudes, umfassend das Abdecken von einer oder mehreren Außen- oder Innenflächen des Gebäudes durch eine oder mehrere übereinanderliegende Schichten aus einem wärmeisolierenden Material, wie in den vorhergehenden Ansprüchen definiert, oder das Einarbeiten von einer oder mehreren Schichten eines solchen Materials in die Struktur der Wände des Gebäudes, wobei die Gesamtdicke aller übereinanderliegenden Schichten ausreichend ist, um einen Wärmewiderstand von mindestens gleich 2,4 m².K/W für die Wärmeisolierung der Wände und von mindestens gleich 4,5 m².K/W für die Wärmeisolierung der Dächer zu erhalten.

## Claims

1. Heat-insulating material intended to be used for the thermal insulation of buildings, comprising a nonwoven textile material having a thickness of at least 30mm substantially consisting:
(a) of organic fibres having a fineness between 0.0025dtex and 4.5dtex, preferably between 0.1 and 1 dtex, and
(b) of 0.1% to 12%, by weight with respect to the organic fibres (a), of at least one metal powder in the non-oxidised state, having an average equivalent diameter between 0.5 and 30µm, consisting of a metal material having, in the solid state, an emissivity of less than 0.2, preferably less than 0.1.

2. Heat-insulating material according to claim 1, **characterised by** the fact that the nonwoven textile material has a thermal conductivity X of less than 0.045W/m.K, preferably less than 0.038W/m.K.

3. Heat-insulating material according to claim 1, **characterised by** the fact that the organic fibres are natural, artificial or synthetic fibres or a mixture of such fibres, preferably synthetic or artificial fibres or a mixture of such fibres.

4. Heat-insulating material according to one of claims 1 to 3, **characterised by** the fact that the organic fibres are non-hydrophilic fibres.

5. Heat-insulating material according to any one of the previous claims, **characterised by** the fact that the organic fibres are synthetic fibres chosen from the fibres of polyester, of polyamide, of acrylic polymers, of polyurethane, of poly(vinyl alcohol), of polyolefins, of phenolic polymers, of polyacrylates, of chlorinated or fluorinated vinyl polymers, of aramid, of poly(aryletheretherketone) (PEEK), of poly(benzimidazole) (PBI), of poly(ether imide) (PEI), and of phenylene polysulfide) (PPS).

6. Heat-insulating material according to any one of the previous claims, **characterised by** the fact that the natural fibres are cellulose fibres chosen from cotton, flax, jute, hemp and other plant fibres, or protein fibres chosen from silk, wool and the hair and feathers of animals, these fibres preferably having undergone a treatment making them non-hydrophilic and/or non-hygroscopic.

7. Heat-insulating material according to any one of the previous claims, **characterised by** the fact that the nonwoven textile material has a density between 5 and 50kg/m³, preferably between 10 and 40kg/m³ and in particular between 15 and 35kg/m³.

8. Heat-insulating material according to any one of the previous claims, **characterised by** the fact that the nonwoven textile material has a thickness between 40 and 120mm, preferably between 50 and 100mm.

9. Heat-insulating material according to any one of the previous claims, **characterised by** the fact that the metal material of the particles (b) having a low emissivity is chosen from those having a resistance to corrosion such that the increase in the emissivity of the metal powder after an oxidation test is less than 0.1.

10. Heat-insulating material according to any one of the previous claims, **characterised by** the fact that the metal material of the particles (b) having a low emissivity is chosen from the metal alloys containing copper, zinc, tin, titanium, zirconium, niobium, tantalum, aluminium, iron and nickel and from titanium, zirconium, hafnium, vanadium, niobium, tantalum, silicon, tin, nickel, molybdenum, manganese and chromium.

11. Heat-insulating material according to any one of claims 1 to 8, further comprising (c) 0.2 to 20%, by weight with respect to the organic fibres (a), of at least one non-metal powder having an average equivalent diameter between 2 and 10µm, of a material having, in the solid state, a thermal conductivity lower than 20W.m⁻¹K⁻¹ and optionally **characterised by** the fact that the
non-metal particles (c) are chosen from
synthetic mineral materials such as the oxides, carbides, nitrides, carbonitrides, carbonates, silicates,
aluminates and sulphides of metals, in particular of transition metals, natural mineral materials such as rocks and artificial mineral materials such as slag, ashes and modified rocks.

12. Heat-insulating material according to claim 11, **characterised by** the fact that the non-metal particles (c) are chosen from rocks, slag, ashes and modified rocks.

13. Heat-insulating material according to any one of the previous claims, **characterised by** the fact that the powders have an average equivalent diameter between 2 and 10µm, preferably between 3 and 7.5µm.

14. Heat-insulating material according to any one of the previous claims, **characterised by** the fact that nonwoven textile material comprises, by weight, 3 to 6% metal powder (b) having a low emissivity.

15. Heat-insulating material according to any one of claims 1 to 13, **characterised by** the fact that the nonwoven textile material comprises, by weight, 5 to 10% non-metal powder (c) having a low thermal conductivity.

16. Method for thermal insulation of a building, comprising the covering of one or more outer or inner surfaces of said building with one or more superimposed layers of a heat-insulating material as defined in the previous claims, or the incorporation of one or more layers of such a material into the structure of the walls of said building, the total thickness of all of the superimposed layers being sufficient to obtain a thermal resistance at least equal to 2.4m².K/W for the thermal insulation of the walls and at least equal to 4.5m².K/W for the thermal insulation of the roof.
